Europäisches Patentamt

European Patent Office

Office européen des brevets

(11) Veröffentlichungsnummer: **0 302 009**
**A1**

(12) # EUROPÄISCHE PATENTANMELDUNG

(21) Anmeldenummer: **88810478.3**

(22) Anmeldetag: **13.07.88**

(51) Int. Cl.4: **G 01 N 21/05**

(30) Priorität: **22.07.87 CH 2773/87**

(43) Veröffentlichungstag der Anmeldung:
**01.02.89 Patentblatt 89/05**

(84) Benannte Vertragsstaaten:
**AT CH DE ES FR GB IT LI SE**

(71) Anmelder: **CIBA-GEIGY AG**
**Klybeckstrasse 141**
**CH-4002 Basel (CH)**

(72) Erfinder: **Danigel, Harald, Dr.**
**Kleinhüningerstrasse 98**
**CH-4057 Basel (CH)**

**Schatzmann, Hans-Rudolf**
**Burgfelderstrasse 33**
**CH-4055 Basel (CH)**

(54) **Prozessküvette.**

(57) Eine Prozessküvette (1) zur Analyse von Flüssigkeiten mit insbesondere hoher Lichtabsorption hat einen von dieser Flüssigkeit durchflossenen Messraum (3), der zwei der Messung einander mit geringem Abstand gegenüberliegende Fenster (4,5) zum Durchtritt des Messlichtes aufweist. Die Konstanz des Messabstandes ist durch an den Fenstern (4,5 angebrachte Anschläge (12) gewährleistet, welche zugleich ein Messvolumen für die zu analysierende Flüssigkeit begrenzen. Zumindest eines der Fenster (4,5) ist zum Messen in eine Endstellung mit geringem Abstand zum zweiten Messfenster und für eine Spülung und/oder einen Probenaustausch in eine zweite Endstellung mit grösserem Abstand bewegbar.

Fig. 1

EP 0 302 009 A1

## Beschreibung

### Prozessküvette

Die Erfindung betrifft eine Prozessküvette gemäss Oberbegriff des Patentanspruches 1.

Derartige Küvetten, welche zur Analyse von Flüssigkeiten während eines Arbeitsprozesses eingesetzt werden und deshalb vorstehend Prozessküvetten genannt wurden, sind in verschiedenen Ausführungsformen bekannt.

Aus der US-A-3,740,156 ist z.B. eine Prozessküvette bekannt, deren eines von zwei Messfenstern mit planparallelen Lichtaustrittsflächen nur während einer Analysemessung in unmittelbare Nachbarschaft zum zweiten gebracht wird, dh. nur während des Messvorganges ein Hindernis für die zu analysierende Flüssigkeit im durchströmten Rohr darstellt. Dieses eine Messfenster ist also aus einer Ruhestellung im Bereich der Rohrwandung in eine Arbeitsstellung mit einstellbarem geringem Abstand zum zweiten Messfenster bewegbar. Insbesondere bei der Analyse von trüben, gefärbten oder dergleichen Flüssigkeiten mit insbesondere hoher Lichtabsorption sind Minimalabstände von etwa einem hundertstel Millimeter oder sogar kleiner nötig. Ein wesentlicher Nachteil dieser Vorrichtung ist, dass die Einhaltung dieser geringen Messabstände bei unterschiedlichen Temperaturen der zu analysierenden Flüssigkeiten aufgrund von Temperaturdehnung des Fensterträgermaterials nicht genau eingehalten werden kann, was zu Verfälschungen der Messergebnisse führt.

Weitere derartige Prozessküvetten sind z.B. aus der US-A-3,810,695, der GB-A-796,745 oder der DE-A-2,414,162 bekannt. Bei allen diesen Prozessküvetten befinden sich beide Messfenster mit den zugehörigen Halterungen ständig in der Flüssigkeitsströmung. Der Messfensterabstand dieser Vorrichtungen ist zwar einstellbar, jedoch lässt sich auch bei diesen Prozessküvetten der Messfensterabstand nicht genau einhalten, insbesondere bei unterschiedlichen Temperaturen der zu analysierenden Flüssigkeit variiert dieser Abstand aufgrund der Temperaturdehnung der Fensterhalterungen in einem Ausmass, welches die Analyseergebnisse verfälscht.

Wieder andere Prozessküvetten, deren Messfensterabstand nicht veränderbar ist, sind z.B. in dem DE-G-84 07 054.4 oder der Analytical Chemistry, Vol. 55, No. 14 (Dec. 1983), Easton, Pennsylvania, USA beschrieben. Auch diese bekannten Prozessküvetten weisen den Nachteil auf, dass der Messfensterabstand sich mit Temperaturschwankungen der zu analysierenden Flüssigkeit verändert und entsprechend zu falschen Messergebnissen führt.

Der Vollständigkeit halber sei noch die aus der EP-A 0,158,948 bekannte Durchflussküvette erwähnt, welche kapillarenartige Durchflusskanäle aufweist und deren Messfenster nichtplane Lichtaustrittflächen besitzen. Der Einsatz derartiger Durchflussküvetten erfolgt nicht im grosstechnischen Arbeitsprozess, vielmehr sind diese Küvetten auch als hochdruckfeste Durchflussküvetten im Laborspezialbetrieb bekannt.

Es besteht daher die Aufgabe eine Prozessküvette der eingangs erwähnten Art bereitzustellen, bei welcher in allen Fällen von Temperaturschwankungen der Flüssigkeit der gewünschte Messfensterabstand eingehalten wird.

Die Lösung dieser Aufgabe besteht in einer Prozessküvette gemäss Kennzeichen des Patentanspruches 1.

Nachstehend ist die Erfindung mit ihren ihr als wesentlich zugehörenden Einzelheiten anhand der Zeichnung in einem Ausführungsbeispiel näher beschrieben. Es zeigt in schematisierter Darstellung.

Fig. 1 einen Querschnitt durch den Messraum einer erfindungsgemässen Prozessküvette mit einem Längsschnitt durch die Halter der parallelen Fenster, wobei diese sich in Messposition befinden,

Fig. 2 die beiden Fensterkörper in Messposition, wobei sie im Bereich ihrer einander zugewandten Oberflächen geschnitten dargestellt sind, sowie

Fig. 3 eine Stirnansicht eines Fensters mit einem einstückig an ihm angeordneten ringförmigen Anschlag.

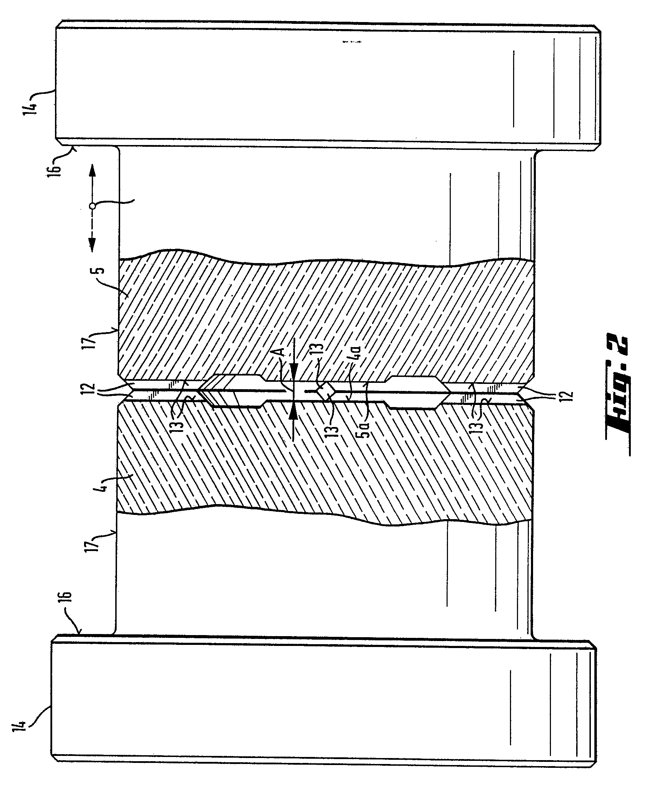

Eine im ganzen mit 1 bezeichnete Prozessküvette kann mit Hilfe von Gewinde-Bohrungen 2 innerhalb von Rohrleitungen oder Bypässen installiert werden. Sie hat einen dann in Fortsetzung einer solchen Leitung von einem Medium, vor allem einer trüben Flüssigkeit mit hoher lichtabsorption durchflossenen Messraum 3, der zwei bei der Messung einander mit geringem Abstand gegenüberliegende Fenster 4 und 5 mit planparallelen Lichtaustritts- bzw. Lichteintrittsflächen aufweist. Bei dem einen Fenster 4 wird Licht in den Messraum 3 eingeleitet und an dem gegenüberliegenden Fenster 5 zur Weiterleitung zu einer spektroskopischen Untersuchung in einen Photometer oder dergleichen, welches in der Zeichnung aber nicht dargestellt ist, aufgefangen. Es könnte aber das Licht genauso gut beim Fenster 5 eingeleitet und am Fenster 4 aufgefangen und weitergeleitet werden. Vor allem anhand der Fig. 2 ist dargestellt, dass dabei der Abstand A der beiden einander zugewandten Fenster 4 und 5 beziehungsweise ihrer Oberflächen 4a und 5a nur sehr gering ist, so dass selbst dann genügend Licht von dem aufnehmenden Fenster empfangen wird, wenn die Flüssigkeit eine sehr hohe Lichtabsorption hat.

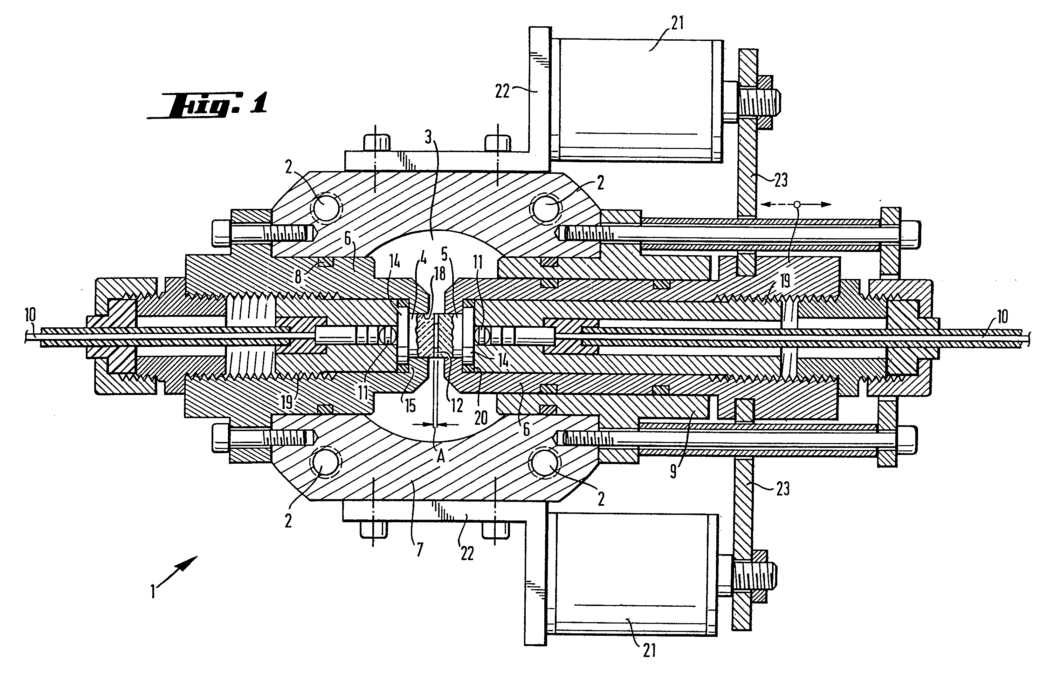

Gemäss Fig. 1 ist nun eines der Fenster, beispielsweise das Fenster 5, von einem in den Messraum 3 reichenden Halter 6 gefasst und mit seinem Halter 6 relativ zu dem anderen Fenster bezüglich des Abstandes A zu diesem veränderbar und verstellbar. Aus der in Fig. 2 dargestellten Lage kann also eines der Fenster von dem anderen wegbewegt werden. Zum Messen befindet sich dabei dann dieses Fenster in der einen Endstellung mit geringem Abstand zwischen beiden Fenstern. Für eine Spülung und einen Probenaustausch zwischen den beiden Fenstern 4 und 5 ist dann das verstellbare Fenster in eine zweite Endstellung mit grösserem Abstand bewegbar.

Im Ausführungsbeispiel sind beide Fenster 4 und 5 in Halter 6 gefasst und die Halter 6 ragen in den lichten Querschnitt des Messraumes 3 hinein, lassen aber einen Teil des durchströmten Querschnittes des Messraumes 3 auch in dieser Messstellung frei. Man erkennt in Figur 1 deutlich, dass die Halter 6 in ihren Aussenabmessungen geringer als der Querschnitt des Messraumes 3 sind, so dass genügend Platz für eine weitgehend unbehinderte Strömung auch in der in Fig. 1 dargestellten Messstellung verbleibt.

Die Rückzuggeschwindigkeit des verstellbaren Fensterhalters 6 kann dabei so gross gewählt sein, dass während des Zurückziehens aus der in Fig. 1 dargestellten Endlage mit dem geringen Abstand A in die andere Endlage mit grossem Abstand zwischen den beiden Fenstern 4 und 5 ein Unterdruck auftritt. Zumindest im ersten Augenblick des Zurückziehens des bewegbaren Fensters wird dieser Unterdruck relativ stark sein, so dass eine zusätzliche Saugwirkung in den Bereich zwischen den beiden Fenstern 4 und 5 entsteht, wodurch die Flüssigkeit zeitweilig in diesem Bereich eine höhere Strömungsgeschwindigkeit erhält und eine bessere Spülwirkung hat. Dadurch wird erreicht, dass die gemessene, in dem schmalen Spalt zwischen den Fenstern vorhandene Flüssigkeit mit Sicherheit entfernt wird und nicht die nächste Messung verfälschen kann.

Im Ausführungsbeispiel ist der Fensterhalter 6 mit seinem Fenster 4 an dem Küvettengehäuse 7 fest installiert und gegenüber dem Küvettengehäuse 7 mit einer Dichtung 8 abgedichtet. Der zweite Fensterhalter 6 ist in einer fest installierten Führung 9 etwa radial zu dem Messraum 3 verschiebbar, wobei der Halter 6 für das feststehende Fenster 4 und dessen Oberfläche gemäss Fig. 1 nahe der Mitte oder in der Mitte des Messraumes 3 angeordnet ist und das verstellbare Fenster 5 in seiner Messposition in eine dazu etwa symmetrische Position ebenfalls nahe der Mitte verschiebbar ist. Somit wird ein Flüssigkeitsbereich von den Fenstern erfasst, der im Inneren der Strömung liegt und von Wandeffekten und dergleichen möglichst nicht beeinflusst. Darin liegt ein weiterer Vorteil der Massnahme, die Fenster in Halter zu fassen und gegenüber der Innenwand des Messraumes nach innen vorstehen zu lassen, statt die Wände des Messraumes nah aneinanderzuführen.

Zur Lichtzuleitung und zur Lichtableitung sind an den Fenstern 4 und 5 jeweils Lichtwellenleiter 10 über Linsensysteme 11 angeschlossen. Somit kann sowohl die Lichtquelle als auch das Messgerät in nahezu beliebiger Entfernung von der eigentlichen Messstelle und somit unbeeinflusst von Prozessbedingungen angeordnet werden.

Um vor allem den Messabstand A wirklich klein halten zu können, beispielsweise in der Grössenordnung von etwa einem hundertstel Millimeter oder sogar weniger, ist im Ausführungsbeispiel vorgesehen, dass die Fenster 4 und 5 einen Abstandhalter 12 zur Begrenzung der Verstellbewegung in die Messposition aufweisen. Man erkennt dies besonders deutlich anhand der Fig. 2, wo die Fenster 4, 5 an den Oberflächen 4a, 5a entsprechende, den Messabstand festlegende Abstandhalter 12 aufweisen, welcher jeder als umlaufender, etwa ringförmig um die das Licht aussendende oder empfangende Oberfläche 4a, 5a des Fensters 4, 5 an diesem angeordneter Anschlag ausgebildet ist.

Selbstverständlich können die Abstandhalter 12 auch an den Haltern 6 vorgesehen werden, jedoch wird durch die Anordnung unmittelbar an den Fenstern oder einem der Fenster erreicht, dass diese tatsächlich bezüglich ihrer wirksamen Oberflächen 4a, 5a praktisch immer den richtigen Messabstand A erhalten, wenn sie aneinanderliegen.

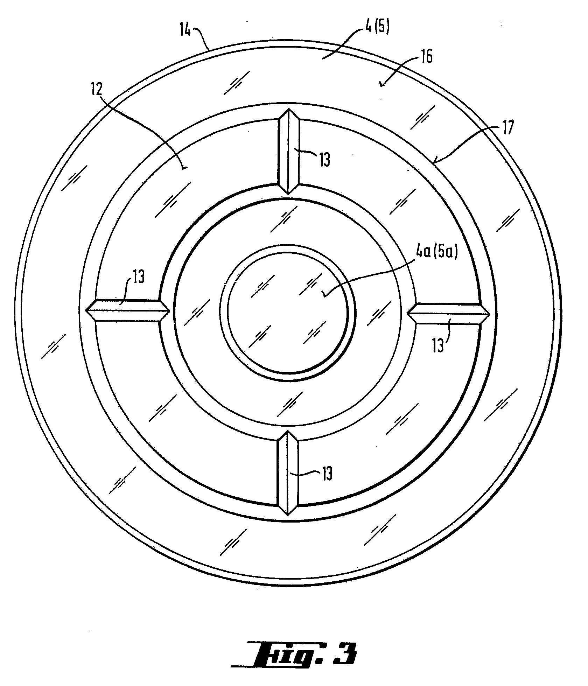

In diesem Ausführungsbeispiel hat der umlaufende Abstandhalter 12 oder Anschlag an seinem Umfang verteilte, ihn über seine radiale Breite durchsetzende Unterbrechungen 13, wobei man in Fig. 3 erkennt, dass vier derartige Unterbrechungen 13 jeweils um 90 Grad versetzt an dem ringförmigen Abstandhalter 12 vorgesehen sein können. Dabei haben diese Unterbrechungen 13 die Form von Kerben und reichen von der oberen Anschlagfläche ausgehend über einen Teil der axialen Höhe des Abstandhalters 12, was in Fig. 2 deutlich wird. Werden die beiden Fenster schnell oder gegen den Widerstand von insbesondere zäher oder hochviskoser Flüssigkeit einander angenähert, kann vor allem im letzten Augenblick die überschüssige Flüssigkeit zwischen den beiden Fenstern durch diese Unterbrechungen 13 nach der Seite entweichen.

Nach dem Zusammenführen der beiden Fenster ergibt sich zwischen diesen im Bereich des Abstandes ein abgeschlossenes oder praktisch abgeschlossenes Messvolumen, in dem somit eine unbeeinflusste und sehr genaue Messung durchgeführt werden kann.

In Fig. 1 ist dargestellt, dass die von den Haltern 6 gefassten Fensterkörper im Inneren des Halters 6 jeweils eine Querschnittsvergrösserung 14 mit einer von einer Hinterschneidung 15 des Halters 6 übergriffenen Anschlagfläche 16 (Fig. 2) haben, die mit der Hinterschneidung 15 des Halters 6 zusammen eine Passfläche bilden. Die Passflächen der beiden einander gegenüberliegenden Halter 6 und somit auch die Fensteroberflächen sind parallel.

Die von den Querschnittsvergrösserungen 14 ausgehenden Fensterkörper sind mit ihren im Ausführungsbeispiel auf einem Zylinder liegenden Seitenflächen 17 in Stecköffnungen 18 der Halter 6 an deren Stirnseiten in einem Schiebesitz eingepasst und stehen mit den einander zugewandten planparallelen Fensterflächen aus diesen Stecköffnungen 18 vor, so dass beim Zusammenschieben der beiden Fenster die Halter die Einstellung des Messabstandes nicht stören können.

Die den Fensterflächen abgewandten Stirnseiten der Fensterkörper, an denen die Linsensysteme 11 angeschlossen sind, sind im Ausführungsbeispiel jeweils von einem einschraubbaren Druckstück 19 abgestützt, welches gleichzeitig einen im Bereich der Querschnittsvergrösserungen 14 befindlichen Dichtring oder O-Ring 20 festlegt. Für das verstellbare Fenster 5 beziehungsweise seinen Halter 6 ist im Ausführungsbeispiel ein pneumatischer Stellantrieb vorgesehen, dessen Pneumatikzylinder 21 mit Hilfe von Winkelstücken 22 an dem Küvettengehäuse 7 befestigt sind und die über eine Schaltgabel 23 an dem verschieblichen Halter 6 angreifen. Die Fensterkörper bestehen zweckmässigerweise aus Saphir oder Quarz, um eine grössere Härte und bessere Widerstandsfähigkeit gegen Chemikalien zu haben und sogar UV-Licht durchzulassen.

**Patentansprüche**

1. Prozessküvette (1) mit einem von einer insbesondere trüben oder gefärbten oder dergleichen Flüssigkeit mit insbesondere hoher Lichtabsorption bei deren Bearbeitung oder Weiterleitung durchflossenen Messraum (3), der zwei der Messung einander mit geringem Abstand (A) gegenüberliegende Fenster (4,5) aufweist, wobei bei dem einen Fenster (4) Licht in den Messraum eingeleitet und an dem gegenüberliegenden Fenster (5) zur Weiterleitung zu einer vorzugsweise spektroskopischen Untersuchung in einem Photometer oder dergleichen aufgefangen wird, wenigstens eines der Fenster von einem in den Messraum (3) reichenden Halter (6) gefasst und mit seinem Halter (6) relativ zu dem anderen Fenster bezüglich des Abstandes zu diesem veränderbar und verstellbar ist, so dass es zum Messen in die eine Endstellung mit geringem Abstand zwischen den beiden Fenstern und für eine Spülung und/oder einen Probenaustausch zwischen beiden Fenstern in eine zweite Endstellung mit grösserem Abstand bewegbar ist, dadurch gekennzeichnet, dass die Fenster (4,5) und/oder ihre Halter (6) einen Abstandhalter (12) zur Begrenzung der Verstellbewegung in die Messposition aufweisen, welcher zugleich ein Messvolumen für die zu analysierende Flüssigkeit begrenzt.

2. Küvetten nach Anspruch 1, dadurch gekennzeichnet, dass der den Messabstand festlegende Abstandhalter (12) als umlaufender, insbesondere etwa ringförmig um die das Licht aussendende und/oder empfangende Oberfläche des Fensters an diesem insbesondere einstückig angeordneter Anschlag ausgebildet ist.

3. Küvette nach Anspruch 1 oder 2, dadurch gekennzeichnet, dass der umlaufende Anschlag an seinem Umfang verteilte, ihn über seine radiale Breite durchsetzende Unterbrechungen (13), vorzugsweise Kerben oder dergleichen aufweist, die von seiner Anschlagfläche ausgehend wenigstens über einen Teil seiner axialen Höhe reichen.

4. Küvette nach einem der Ansprüche 1 bis 3, dadurch gekennzeichnet, dass der Messabstand etwa ein hundertstel Millimeter oder mehr beträgt.

5. Küvette nach einem der Ansprüche 1 bis 4, dadurch gekennzeichnet, dass beide Fenster (4,5) in Halter (6) gefasst sind und die Halter (6) in den lichten Querschnitt des Messraumes (3) hineinragen und einen Teil des durchströmten Querschnittes des Messraumes (3) auch in Messstellung freilassen.

6. Küvette nach einem der Ansprüche 1 bis 5, dadurch gekennzeichnet, dass die Rückzuggeschwindigkeit des verstellbaren Fensterhalters (6) so gross gewählt ist, dass während des Zurückziehens aus der Endlage mit dem geringen Abstand in die Endlage mit dem grossen Abstand zwischen den beiden Fenstern (4,5) ein Unterdruck besteht.

7. Küvette nach einem der Ansprüche 1 bis 6, dadurch gekennzeichnet, dass der eine Fensterhalter (6) mit seinem Fenster (4) am Küvettenehäuse (7) fest installiert und gegenüber dem Küvettengehäuse (7) abgedichtet ist und der zweite Fensterhalter (6) in einer fest installierten Führung (9) etwa radial zu dem durchströmten Messraum (3) verschiebbar ist, wobei der Halter (6) für das feststehende Fenster (4) und dessen Oberfläche vorzugsweise nahe der Mitte des Messraumes (3) angeordnet ist und das verstellbare Fenster (5) in seiner Messposition in eine dazu etwa symmetrische Position nahe der Mitte verschiebbar ist.

8. Küvette nach einem der Ansprüche 1 bis 7, dadurch gekennzeichnet, dass zur Lichtzuleitung und/oder Lichtableitung an den Fenstern (4,5) Lichtwellenleiter (10) gegebenenfalls über Linsensysteme (11) oder dergleichen angeschlossen sind.

9. Küvette nach einem der Ansprüche 1 bis 8, dadurch gekennzeichnet, dass die von den Haltern (6) gefassten Fensterkörper im Inneren des Halters (6) eine Querschnittsvergrösserung (14) mit einer von einer Hinterschneidung (15) des Halters (6) übergriffenen Anschlagfläche (16) haben, die mit der Hinterschneidung (15) des Halters (6) zusammen eine Passfläche bildet, und dass die Passflächen der beiden einander gegenüberliegenden Halter (6) und die Fenster-Oberflächen parallel sind.

10. Küvetten nach einem der Ansprüche 1 bis 9, dadurch gekennzeichnet, dass die von den Querschnittsvergrösserungen (14) ausgehenden Fensterkörper mit ihren vorzugsweise auf einem Zylinder liegenden Seitenflächen (17) in Stecköffnungen (18) der Halter (6) in einem Schiebesitz eingepasst sind und mit den einander zugewandten Fensterflächen aus diesen Stecköffnungen (18) vorstehen.

11. Küvetten nach einem der Ansprüche 1 bis 10, dadurch gekennzeichnet, dass die den Fensterflächen abgewandten Stirnseiten der Fensterkörper von einem vorzugsweise einschraubbaren Druckstück (19) oder dergleichen abgestützt sind, welches vorzugsweise gleichzeitig einen insbesondere im Bereich der Querschnittsvergrösserungen (14) befindlichen Dichtring oder O-Ring (20) festlegt.

12. Küvette nach einem der Ansprüche 1 bis 11, dadurch gekennzeichnet, dass die Fensterkörper aus Saphir oder Quarz bestehen.

13. Küvette nach einem der Ansprüche 1 bis 12, dadurch gekennzeichnet, dass für das verstellbare Fenster (5) beziehungsweise seinen Halter (6) ein pneumatischer, hydraulischer oder gegebenenfalls elektrischer Stellantrieb vorgesehen ist.

0302009

Fig. 1

*Fig. 2*

0302009

_Fig. 3_

Europäisches Patentamt

**EUROPÄISCHER RECHERCHENBERICHT**

Nummer der Anmeldung

EP 88 81 0478

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| D,X | US-A-3 740 156 (HEIGL) <br> * Figuren 1-4; Spalte 2, Zeilen 23-48; Spalte 3, Zeilen 25-28; Spalte 3, Zeile 65 – Spalte 4, Zeile 64 * | 1,4,5, 12,13 | G 01 N 21/05 |
| A | | 10 | |
| D,A | EP-A-0 158 948 (FIRMA C. ZEISS) <br> * Figur 3c; Seite 1, Zeile 31 – Seite 2, Zeile 4; Seite 2, Zeilen 23-29; Seite 5, Zeilen 29-36 * | 2-4,8, 12 | |
| D,A | DE-A-2 414 162 (G-S-T REGELTECHNIK) <br> * Figuren 1-3 * | 7 | |
| D,A | ANALYTICAL CHEMISTRY, Band 55, Nr. 14, Dezember 1983, Seiten 2459,2460, American Chemical Society, US; K.A. SATURDAY: "Absorption cell with fiber optics for concentration measurements in a flowing gas stream" <br> * Seite 2459, linke Spalte * | 8 | |
| D,A | GB-A- 796 745 (GENERAL INSTRUMENTS CO. LTD) <br> * Figur 1; Seite 2, Zeilen 51-68 * | 9-11 | RECHERCHIERTE SACHGEBIETE (Int. Cl.4) <br><br> G 01 N |
| D,A | US-A-3 810 695 (SHEA) | | |

Der vorliegende Recherchenbericht wurde für alle Patentansprüche erstellt

| Recherchenort | Abschlußdatum der Recherche | Prüfer |
|---|---|---|
| DEN HAAG | 20-10-1988 | KLEIKAMP B.M.H.H. |